# EUROPÄISCHE PATENTSCHRIFT

(11) **EP 2 984 034 B1**
(45) Veröffentlichungstag und Bekanntmachung des Hinweises auf die Patenterteilung: **15.02.2017**
(21) Anmeldenummer: 14712264.2
(22) Anmeldetag: 20.03.2014
(51) Int. Cl.: C01B 33/035, B08B 3/04, B08B 1/00

(54) **REINIGUNG VON CVD-PRODUKTIONSRÄUMEN**
CLEANING OF CVD PRODUCTION SPACES
NETTOYAGE D'ESPACES DE PRODUCTION FAISANT APPEL AU DÉPÔT CHIMIQUE EN PHASE VAPEUR

(30) Priorität: 11.04.2013 DE 102013206436
(43) Veröffentlichungstag der Anmeldung: 17.02.2016
(73) Patentinhaber: Wacker Chemie AG, 81737 München (DE)
(72) Erfinder: HERTLEIN, Harald, 84489 Burghausen (DE); POPP, Friedrich, Ooltewah, TN 37363 (US)
(74) Vertreter: Potten, Holger
(86) Internationale Anmeldenummer: PCT/EP2014/055605
(87) Internationale Veröffentlichungsnummer: WO 2014/166718

(56) Entgegenhaltungen:
- EP-A1- 1 544 167
- EP-A1- 2 431 329
- DE-A1-102008 040 231
- DE-A1-102012 218 748

## Beschreibung

Gegenstand der Erfindung ist ein Verfahren zur Reinigung von CVD-Produktionsräumen zur Herstellung von polykristallinem Silicium.

Die Erfindung bezieht sich auf Räume bzw. Fabrikhallen, in denen mittels CVD (chemical vapor deposition) polykristallines Silicum hergestellt wird.

Die Herstellung von polykristallinem Silicium erfolgt üblicherweise mittels des Siemens-Verfahrens. Dabei wird ein Reaktionsgas umfassend eine oder mehrere Silicium enthaltende Komponenten und gegebenenfalls Wasserstoff in einen Reaktor umfassend durch direkten Stromdurchgang erhitzte Trägerkörper eingeleitet, wobei sich an den Trägerkörpern Silicium in fester Form abscheidet. Als Silicium enthaltende Komponenten werden bevorzugt Silan (SiH₄), Monochlorsilan (SiH₃Cl), Dichlorsilan (SiH₂Cl₂), Trichlorsilan (SiHCl₃), Tetrachlorsilan (SiCl₄) oder Mischungen der genannten Stoffe eingesetzt.

Das Siemens-Verfahren wird üblicherweise in einem Abscheidereaktor (auch "Siemens-Reaktor" genannt) durchgeführt. In der gebräuchlichsten Ausführungsform umfasst der Reaktor eine metallische Grundplatte und eine kühlbare Glocke, die auf die Grundplatte gesetzt ist, so dass ein Reaktionsraum im Inneren der Glocke entsteht. Die Grundplatte ist mit einer oder mehreren Gaseinlassöffnungen und einer oder mehreren Abgasöffnungen für die abgehenden Reaktionsgase sowie mit Halterungen versehen, mit deren Hilfe die Trägerkörper im Reaktionsraum gehalten und mit elektrischen Strom versorgt werden.

In einem Produktionsraum sind mehrere solcher Siemens-Reaktoren angeordnet. Dabei umfasst die Anlage auch eine Vielzahl von Rohrleitungen, um die Reaktoren mit den Reaktionsgasen, nämlich Silanen und gegebenenfalls Wasserstoff zu versorgen, und um Abgase, die bei der Abscheidung entstehen, abzuführen.

Polykristallines Silicium muss hohen Reinheitsanforderungen genügen.

Das polykristalline Silicium kann beim Ausbau der Stäbe aus dem Reaktor und bei den nachfolgenden Bearbeitungsschritten kontaminiert werden.

Der Großteil der hergestellten polykristallinen Siliciumstäbe muss zu Bruchstücken zerkleinert werden, da nur Bruchstücke von den Kunden der Elektronik- und Solarindustrie weiterverarbeitet werden können. Eine Ausnahme bilden polykristalline Siliciumstäbe, die mittels des Zonenziehens (Floatzone- oder FZ-Verfahren) direkt in monokristalline Siliciumstäbe überführt und anschließend verwafert werden.

Die mechanische Zerkleinerung der Stäbe erfolgt üblicherweise mittels Brechanlagen, die metallische Brechwerkzeuge umfassen. Dabei wird das polykristalline Silicium an der Oberfläche kontaminiert. Es wird versucht, dem durch verschiedene Maßnahmen entgegenzuwirken, z.B. durch Brechwerkzeuge aus Hartmetall, die besonders abriebfest sind und dadurch weniger Metalle an das Polysilicium abgeben. Ist das polykristalline Silicium für die Elektronikindustrie bestimmt, erfolgt zudem eine nasschemische Reinigung der Bruchstücke, um Metalle von der Oberfläche des Polysiliciums wegzuätzen.

Allerdings ist das polykristalline Silicium während der gesamten Verarbeitung Umwelteinflüssen ausgesetzt. Das beginnt beim Ausbau der Stäbe aus dem Reaktor, betrifft die Transportvorgänge zu nachfolgenden Bearbeitungsschritten und die Bearbeitung in Brech-, Reinigungs- und Verpackungsanlagen. Auch dies kann zu Kontaminationen führen.

Insbesondere der Ausbau der Stäbe aus dem Reaktor wurde als kritischer Schritt in der Polysiliciumfertigung ausgemacht.

EP 2 431 329 A1 offenbart ein Verfahren zur Herstellung von polykristallinem Silicium mittels des Siemens-Prozesses, wobei die herstellten Stäbe in einem Reinraum durch eine chemische Reinigung mit einem HF/HNO3-Gemisch behandelt werden.

Nach Abkühlung der Stäbe wird die Reaktorglocke geöffnet und die Stäbe werden per Hand oder mit Hilfe von speziellen Vorrichtungen, sogenannten Ausbauhilfen zur Weiterverarbeitung bzw. zur zwischenzeitlichen Lagerung entnommen. US 20100043972 A1 offenbart eine weitere Vorrichtung zum Ausbau von polykristallinen Siliciumstäben, umfassend eine Wand mit einer Innenwand, einer Außenwand und einer Vielzahl von Verbindungen zwischen Innenwand und Außenwand, eine Lücke zwischen Innen- und Außenwand, ein Zugangsfenster in der Außenwand, eine Bodenplatte, und eine Vielzahl von Kontakten auf der Bodenplatte, wobei Innen- und Außenwand zylindrisch und konzentrisch sind, die Lücke so dimensioniert ist, um eine Vielzahl von auf den Kontakten der Bodenplatte befindlichen Siliciumstäben aufzunehmen, wobei das Zugangsfenster so gestaltet ist, dass Zugang zu den Siliciumstäben ermöglicht wird. Die Stäbe können über die Zugangsfenster entnommen werden.

Sowohl die Lagerung als auch die Weiterverarbeitung, vor allem ein Zerkleinern der Stäbe, ein Klassieren und eine Verpackung gebrochener Stücke, erfolgen in der Regel unter besonderen Umgebungsbedingungen in klimatisierten Räumen, was eine Verunreinigung des Produktes verhindert.

Zwischen dem Zeitpunkt des Öffnens des Reaktors und bis zur Einlagerung bzw. Weiterverarbeitung ist das abgeschiedene Material allerdings umgebungsbedingten Einflüssen, insbesondere Staubpartikelchen, ausgesetzt.

Es wurde vorgeschlagen, beim Ausbau der Polysiliciumstäbe einen sog. Ausbausack zu verwenden und den Siliciumstab mit diesem zu überziehen. US 20120175613 A1 offenbart ein Verfahren zur Herstellung eines polykristallinen Siliciumstücks, bestehend aus einem CVD-Prozess zur Herstellung eines polykristallinen Siliciumstabs durch Abscheidung von Silicium auf einem Filamentdraht, dessen eines Ende an einer ersten Elektrode und dessen anderes Ende an einer zweiten Elektrode angeschlossen ist, einem Prozess zur Entnahme des polykristallinen Siliciumstabs aus dem Reaktor sowie einem Zerkleinerungsprozess des Siliciumstabs in Siliciumstücke, dadurch gekennzeichnet, dass vor dem Zerkleinerungsprozess mindestens 70 mm ab dem Elektrodenende vom polykristallinen Siliciumstab entfernt werden (Fußkürzungsprozess). In einer bevorzugten Ausführungsform wird die Oberfläche des polykristallinen Siliciumstabs vor der Entnahme aus dem Reaktor mit einem sackartigen Teil aus Polyethylen überzogen. Die Entnahme selbst kann mittels eines Krans oder dergleichen erfolgen. Durch das sackartige Teil soll verhindert werden, dass sich beim Stabausbau Metallkörner enthaltend Nickel, Chrom und Kupfer, die nach dem Öffnen des Reaktors in die Arbeitsatmosphäre abgegeben werden, an der Oberfläche von Siliciumstäben anlagern.

Grundsätzlich ist es auch denkbar, den Herstellungsprozess in einem Reinraum durchzuführen. US 20020040568 A1 offenbart eine Anlage zur Fertigung von Halbleiterprodukten, insbesondere von Wafern, mit einer Anordnung von Fertigungseinheiten in wenigstens einem Reinraum mit einem Luftversorgungssystem, dadurch gekennzeichnet, dass bei dem Luftversorgungssystem die Luftzufuhr über den Boden des Reinraums erfolgt. Ein wesentlicher Vorteil dieses Luftversorgungssystems besteht darin, dass dadurch die durch die Schwerkraft bedingte Zirkulation von Zuluft und Abluft ausgenutzt wird, so dass die Zuluft mit einem geringen Energieaufwand an den Orten für die Bearbeitung der Halbleiterprodukte zur Verfügung gestellt wird.

Allerdings weisen Anlagen zur Herstellung von polykristallinem Silicium eine Vielzahl von Siemens-Reaktoren auf. Es ist zu bedenken, dass die abgeschiedenen Stäbe mehrere Meter hoch sein und mehrere 100 kg wiegen können. Daher sind solche Anlagen von einer enormen Größe. Eine Halle mit Dutzenden von Siemensreaktoren als Reinraum auszuführen, ist wirtschaftlich kaum darstellbar.

Aus dieser Problematik ergab sich die Aufgabenstellung der Erfindung.

Die Erfindung sieht vor, Produktionsräume zur Herstellung von polykristallinem Silicium, die eine Vielzahl von CVD-Reaktoren umfassen, mindestens einmal innerhalb von zwei Wochen zu reinigen, wobei zur Reinigung eine wässrige Reinigungsflüssigkeit verwendet wird, wobei Außenhüllen der CVD-Reaktoren, Rohrleitungen und Böden der Produktionsräume gereinigt werden.

Es hat sich gezeigt, dass eine solche regelmäßige Reinigung der Produktions- bzw. Abscheidehallen einen signifikanten positiven Effekt hinsichtlich einer geringeren Belastung der ausgebauten Siliciumstäbe mit Metallen und insbesondere mit Umweltelementen hat.

Zur Reinigung kann ein fusselfreies Tuch verwendet werden. Die Reinigung kann manuell erfolgen.

Ebenso können für die Bodenreinigung Reinigungsautomaten zum Einsatz kommen wie Bürst-, Wasser- und Staub-Sauger, Kehrmaschinen, Scheuersaugmaschinen, Einscheibenmaschinen.

Als Reinigungsflüssigkeit kann Wasser, insbesondere herkömmliches Leitungswasser verwendet werden.

Bevorzugt ist die Verwendung eines Gemisches enthaltend Wasser und anionische / ionische Tenside.

Vorzugsweise enthält die Reinigungsflüssigkeit vollentsalztes Wasser (VE-Wasser).

Besonders bevorzugt ist die Verwendung eines Gemisches enthaltend VE-Wasser und anionische/ionische Tenside.

Beispielsweise können 10 Liter VE-Wasser mit einigen Esslöffeln eines pH-neutralen Reinigungsmittels enthaltend 5-15 % anionische Tenside und weniger als 5% ionische Tenside, ggf.
enthaltend Konservierungsstoffe wie Methylchloroisothiazolinone und Methylisothiazolinone, gemischt und als Reinigungsflüssigkeit verwendet werden.

Bevorzugt ist es, jeweils zunächst die Reaktoren und die Rohrleitungen mit einem mit der Reinigungsflüssigkeit angefeuchtetem fusselfreiem Tuch abzuwischen, und erst dann die Reinigung des Bodens der Produktionshalle vorzunehmen. Die Reinigung des Bodens kann manuell oder mit einem Reinigungsautomaten erfolgen.

Vorzugsweise erfolgt die Reinigung der Außenhüllen der CVD-Reaktoren, der Rohrleitungen und der Böden der Produktionsräume mindestens einmal pro Woche.

Besonders bevorzugt ist es jedoch, den Boden einer Produktionshalle mindestens zweimal wöchentlich zu reinigen, die Rohrleitungen und die Außenhüllen der Reaktoren mindestens einmal täglich zu reinigen.

Es hat sich gezeigt, dass eine solche Art der Reinigung derart effizient ist, dass die Installation teurer Reinraumtechnik überflüssig ist. Dadaurch können erhebliche Investitionskosten eingespart werden. Dies hat auch Einfluss auf die Herstellkosten von Polysilicium.

Die Qualität von Polysilicium hinsichtlich Metallwerten und Umweltelementen läßt sich signifikant verbessern.

Es hat sich auch gezeigt, dass es infolge einer Vereinheitlichung der Reinigungspläne dahingehend, dass mindesetns einmal wöchentlich eine Reinigung der Böden und Anlagenteile erfolgen muss, an unterschiedlichen Standorten kaum mehr Qualitätsunterschiede des an den unterschiedlichen Standorten hergestellten polykristallinen Siliciums gibt. In der Vergangenheit waren hier deutliche Qualitätsunterschiede gegeben, deren Ursachen lange im Verborgenen geblieben sind, da die Herstellungs- und Bearbeitungsprozesse an sich an den verschiedenen Standorten völlig identisch waren.

Überraschenderweise konnte bei Korrelationsversuchen ein indirekt proportionaler Zusammenhang zwischen der Häufigkeit der Abscheidehallenreinigung und den Qualitätsparametern Metalle und Umweltelemente im Polysilicium gefunden werden.

### Beispiel

Untersucht wurde das in drei Abscheidehallen A, B und C produzierte Polysilicium hinsichtlich Oberflächenkontamination mit Fe, Zn und Na.

Die Herstellungsprozesse in den drei Hallen waren identisch. Die Abscheidung erfolgte in baugleichen Siemensreaktoren unter denselben Bedingungen (Temperaturen, Gasflüsse, Düsenquerschnitte usw.) Es wurde auch in allen Hallen auf den gleichen Stabdurchmesser abgeschieden.

Der Ausbau der Stäbe war in den Hallen A, B und C identisch. Die Probestäbe wurden jeweils noch in der Halle in einen PE-Beutel eingetütet und auf einem Transportwagen zur Analytik transportiert.

Die Bestimmung der Oberflächenmetalle erfolgte nach ASTM F 1724-96 durch chemisches Ablösen der Silicium-Oberfläche und anschließender Analyse der abgelösten Lösung mittels ICPMS (inductively-coupled-plasma mass-spectrometry).

Allerdings waren die Reinigungszyklen in den drei Hallen unterschiedlich. In Halle A wurde am häufigsten gereinigt, wie der nachfolgenden **Tabelle 1** zu entnehmen ist. In Halle C wurden alle Teile nur alle 10 Wochen gereinigt.

Zur Reinigung wurde in an allen Hallen ein Gemisch enthaltend VE-Wasser und anionische/ionische Tenside verwendet, mit folgendem Mischungsverhältnis: einige Esslöffel Reinigungsmittel (5-15% anionische und < 5% ionische Tenside) auf 10 Liter VE-Wasser.

**Tabelle 1**

| Standort | Häufigkeit der Reinigung pro Woche | | | Oberflächenverunreinigungen in pptw | | |
|---|---|---|---|---|---|---|
| | Boden | Oberflächen | Stahlbau | Fe | Zn | Na |
| Halle A | 2 | 7 | 1 | 35 | 2 | 7 |
| Halle B | 1 | 1 | 0,13 | 45 | 3 | 9 |
| Halle C | 0,1 | 0,1 | 0,1 | 100 | 12 | 50 |

Bei allen untersuchten Metallen ergaben sich infolge der häufigeren Reinigung von Halle A bessere Werte für die Oberflächenkontamination des dort produzierten Polysiliciums im Vergleich zum Polysilicium von Halle B, und deutlich bessere Werte als in Halle C.

Beschrieben ist somit auch ein polykristalliner Siliciumstab, enthaltend Oberflächenverunreinigungen von weniger als 50 pptw Fe, weniger als 5 pptw Zn und weniger als 10 pptw Na.

Vorzugsweise enthält der polykristalline Siliciumstab Oberflächenverunreinigungen von kleiner oder gleich 35 pptw Fe, kleiner oder gleich 2 pptw Zn und kleiner oder gleich 7 pptw Na.

## Patentansprüche

1. Verfahren zur Reinigung von Produktionsräumen zur Herstellung von polykristallinem Silicium, die eine Vielzahl von CVD-Reaktoren umfassen, wobei eine Reinigung mindestens einmmal innerhalb von zwei Wochen erfolgt, wobei zur Reinigung eine wässrige Reinigungsflüssigkeit verwendet wird, wobei Außenhüllen der CVD-Reaktoren, Rohrleitungen und Böden der Produktionsräume gereinigt werden.

2. Verfahren nach Anspruch 1, wobei zur Reinigung ein fusselfreies Tuch verwendet wird, das mit der Reinigungsflüssigkeit angefeuchtet wird.

3. Verfahren nach Anspruch 1 oder nach Anspruch 2, wobei auch Reinigungsautomaten wie Bürst-, Wasser- und Staub-Sauger, Kehrmaschinen, Scheuersaugmaschinen, Einscheibenmaschinen zur Reinigung verwendet werden.

4. Verfahren nach einem der Ansprüche 1 bis 3, wobei die verwendete Reinigungsflüssigkeit vollentsaltzes Wasser enthält.

5. Verfahren nach Anspruch 4, wobei als Reinigungsflüssigkeit ein Gemisch aus vollentsalztem Wasser und einem pH-neutralen Reinigungsmittel enthaltend 5-15 % anionische Tenside und weniger als 5% ionische Tenside, verwendet wird.

6. Verfahren nach einem der Ansprüche 1 bis 5, wobei Außenhüllen der CVD-Reaktoren, Rohrleitungen und Böden der Produktionsräume mindestens einmal wöchentlich gereinigt werden

7. Verfahren nach einem der Ansprüche 1 bis 6, wobei zunächst jeweils die Außenhüllen der Reaktoren und die Rohrleitungen mit einem mit der Reinigungsflüssigkeit angefeuchtetem fusselfreiem Tuch abgewischt werden, und erst dann die Reinigung der Böden mit der Reinigungsflüssigkeit vorgenommen wird.

8. Verfahren nach einem der Ansprüche 1 bis 7, wobei die Böden mindestens zweimal wöchentlich, die Rohrleitungen und die Außenhüllen der Reaktoren mindestens einmal täglich gereinigt werden.

## Claims

1. Process for cleaning production rooms for producing polycrystalline silicon which comprise a multiplicity of CVD reactors, wherein cleaning is performed at least once within two weeks, wherein an aqueous cleaning liquid is used for cleaning, wherein outer casings of the CVD reactors, pipelines and floors of the production rooms are cleaned.

2. Process according to Claim 1, wherein a fuzz-free cloth which is moistened with the cleaning liquid is used for cleaning.

3. Process according to Claim 1, or according to Claim 2, wherein cleaning machines such as brush-type, wet and dry vacuum cleaners, sweepers, scrubber-dryers, single-disk machines are also used for cleaning.

4. Process according to any one of Claims 1 to 3, wherein the cleaning liquid used contains demineralized water.

5. Process according to Claim 4, wherein the cleaning liquid used is a mixture of demineralized water and a neutral pH cleaning agent containing 5-15% anionic surfactants and less than 5% ionic surfactants.

6. Process according to any one of Claims 1 to 5, wherein outer casings of the CVD reactors, pipelines and floors of the production rooms are cleaned at least once per week.

7. Process according to any one of Claims 1 to 6, wherein firstly, in each case the outer casings of the reactors and the pipelines are wiped with a fuzz-free cloth moistened with the cleaning liquid, and not until then are the floors cleaned with the cleaning liquid.

8. Process according to any one of Claims 1 to 7, wherein the floors are cleaned at least two times per week, the pipelines and outer casings of the reactors at least once per day.

## Revendications

1. Procédé pour le nettoyage d'espaces de production destinés à la fabrication de silicium polycristallin, qui comprennent une pluralité de réacteurs de CVD, où on effectue un nettoyage au moins une fois en l'espace de deux semaines, dans lequel on utilise pour le nettoyage un liquide de nettoyage aqueux, dans lequel on nettoie les enveloppes externes des réacteurs de CVD, les conduits tubulaires et les sols des espaces de production.

2. Procédé selon la revendication 1, dans lequel on utilise pour le nettoyage un chiffon non pelucheux qui est imprégné avec le liquide de nettoyage.

3. Procédé selon la revendication 1 ou la revendication 2, dans lequel on utilise pour le nettoyage également des automates de nettoyage tels que des aspirateurs à brosse, eau et poussière, des balayeuses mécaniques, des autolaveuses, des machines monodisques.

4. Procédé selon l'une quelconque des revendications 1 à 3, dans lequel le liquide de nettoyage utilisé contient de l'eau totalement déminéralisée.

5. Procédé selon la revendication 4, dans lequel on utilise comme liquide de nettoyage un mélange d'eau totalement déminéralisée et d'un produit de nettoyage à pH neutre contenant 5-15 % de tensioactifs anioniques et moins de 5 % de tensioactifs anioniques.

6. Procédé selon l'une quelconque des revendications 1 à 5, dans lequel on nettoie au moins une fois par semaine les enveloppes externes des réacteurs de CVD, les conduits tubulaires et les sols des espaces de production.

7. Procédé selon l'une quelconque des revendications 1 à 6, dans lequel on frotte avec le chiffon non pelucheux imprégné avec le liquide de nettoyage les enveloppes externes des réacteurs et les conduits tubulaires, et seulement ensuite on effectue le nettoyage des sols avec le liquide de nettoyage.

8. Procédé selon l'une quelconque des revendications 1 à 7, dans lequel on nettoie les sols aux moins deux fois par semaine, les conduits tubulaires et les enveloppes des réacteurs au moins une fois par jour.
